# EUROPEAN PATENT APPLICATION

(11) **EP 4 667 327 A1**
(43) Date of publication of application: **24.12.2025**
(21) Application number: 25178981.4
(22) Date of filing: 27.05.2025
(51) Int. Cl.: B62D 25/04, B62D 29/00

(54) **VEHICLE FRONT STRUCTURE**

(30) Priority: 21.06.2024 JP 2024100584
(71) Applicant: TOYOTA JIDOSHA KABUSHIKI KAISHA, Toyota-shi, Aichi-ken 471-8571 (JP)
(72) Inventor: SHIMASAKI, Junichi, TOYOTA-SHI, AICHI-KEN, 471-8571 (JP)
(74) Representative: Cabinet Beau de Loménie

(57) **Abstract**

A vehicle front structure is provided, the vehicle front structure including: a framework body (10) that is integrally formed by die casting and constitutes a framework of a vehicle front portion; and a front pillar (30) that extends in a vehicle-height direction and is mechanically fastened to the framework body (10) at least at a first fastening portion (48) and a second fastening portion (49) the first fastening portion (48) setting on an outer side of the framework body (10) in a vehicle-width direction, the second fastening portion (49) setting on an upper side of the framework body (10) in the vehicle-height direction. The front pillar (30) is configured to include a pillar body portion (32) constituting an outer face, and a pillar reinforcing portion (34) at least partially disposed inside the pillar body portion (32). The pillar body portion (32) and the first fastening portion (48) are mechanically fastened together. The pillar reinforcing portion (34) and the second fastening portion (49) are mechanically fastened together.

## Description

### BACKGROUND OF THE INVENTION

### 1. Field of the Invention

The invention relates to a vehicle front structure.

### 2. Description of Related Art

Japanese Unexamined Patent Application Publication No. 2013-147116 (JP 2013-147116 A) discloses a front pillar including a reinforcing pipe used as a framework member. Specifically, the front pillar disclosed in JP 2013-147116 A includes the reinforcing pipe, an outer reinforcement that supports a front-end of the reinforcing pipe, an inner panel that is disposed inside the reinforcing pipe in the vehicle-width direction, and a side member outer panel that is disposed outside the reinforcing pipe in the vehicle-width direction. In addition, a first joint portion provided on the outer reinforcement and a second joint portion provided on the side member outer panel are adjacent to each other in the vehicle-width direction and joined to an upper end portion of the reinforcing pipe. This restrains stress from being concentrated on a front-end portion of the front pillar.

### SUMMARY OF THE INVENTION

In recent years, a configuration in which a front portion of a vehicle is integrally formed by die casting to reduce the number of parts and improve strength has been considered. However, the joint structure between a front portion of a vehicle body made by die casting and a front pillar has not been taken into consideration, and there is room for improvement in terms of effectively transmitting a collision load to the front pillar in the event of a frontal collision.

The present invention provides a vehicle front structure that can effectively transmit a collision load to a front pillar in the event of a frontal collision in a structure in which a front portion of a vehicle is integrally formed by die casting.

An aspect of the present invention relates to a vehicle front structure including a framework body, and a front pillar. The framework body is integrally formed by die casting and constitutes a framework of a vehicle front portion. The front pillar extends in the vehicle-height direction, and is mechanically fastened to the framework body at least at a first fastening portion and a second fastening portion, the first fastening portion setting on the outer side of the framework body in the vehicle-width direction, the second fastening portion setting on the upper side of the framework body in the vehicle-height direction. The front pillar includes a pillar body portion constituting an outer face, and a pillar reinforcing portion at least partially disposed inside the pillar body portion. The pillar body portion and the first fastening portion are mechanically fastened together. The pillar reinforcing portion and the second fastening portion are mechanically fastened together.

With the vehicle front structure of the aspect as described above, the framework body is integrally formed by die casting. This makes it possible to reduce the number of parts compared to a case in which a framework body is made of a steel sheet or the like.

In addition, the vehicle front structure includes the front pillar extending in the vehicle-height direction, and the front pillar is mechanically fastened to the framework body at least at the first fastening portion set on the outer side of the framework body in the vehicle-width direction and the second fastening portion set on the upper side of the framework body in the vehicle-height direction. Since the front pillar is mechanically fastened to the framework body at two positions in this manner, even when a collision load is input from the framework body to the front pillar in the event of a frontal collision, a favorable fastened state between the front pillar and the framework body can be maintained.

Furthermore, the pillar reinforcing portion reinforces the front pillar, and both the pillar body portion and the pillar reinforcing portion are fastened to the framework body. Thus, the collision load input from the framework body to the front pillar can be distributed between the pillar body portion and the pillar reinforcing portion to be transmitted. In addition, since the pillar body portion does not need to be thickened, it is possible to restrain the front pillar from obstructing a view of an occupant.

In the vehicle front structure of the aspect of the present invention, the first fastening portion may be a mounting base having a substantially columnar shape.

In the vehicle front structure of the aspect of the present invention, the pillar reinforcing portion may have a tubular shape with an axis aligned with an extending direction of the pillar body portion. A fastened portion of the pillar reinforcing portion to the second fastening portion may have a flat shape.

With the vehicle front structure having the configuration as described above, the tubular shape of the pillar reinforcing portion makes it possible to transmit a collision load along the pillar reinforcing portion while restraining an increase in the weight of the front pillar. In addition, since the fastened portion of the pillar reinforcing portion to the second fastening portion has a flat shape, it is possible to ensure a larger contact area between the framework body and the pillar reinforcing portion than in a case in which the fastened portion has a tubular shape, which facilitates the transmission of the collision load.

In the vehicle front structure of the aspect of the present invention, the framework body may be configured to include a front-rear extending portion extending in the vehicle front-rear direction. A fastened portion between the front pillar and the second fastening portion may be set on the front-rear extending portion.

With the vehicle front structure having the configuration as described above, since the front-rear extending portion of the framework body and the front pillar are connected in the vehicle front-rear direction through the second fastening portion, a collision load can be smoothly transmitted from the framework body to the front pillar in the event of a frontal collision.

In the vehicle front structure of the aspect of the present invention, the framework body may be configured to include a front pillar lower portion extending in the vehicle-height direction. A fastened portion between the front pillar and the first fastening portion may be set on the front pillar lower portion.

With the vehicle front structure having the configuration as described above, since the framework body is provided with the front pillar lower portion, the front pillar can be coupled to a framework of the lower portion of the vehicle such as a rocker through the front pillar lower portion.

In the vehicle front structure having the configuration as described above, the front pillar lower portion may be provided with a plurality of ribs, each of the ribs projecting outward in the vehicle-width direction and extending in the vehicle front-rear direction.

In the vehicle front structure of the aspect of the present invention, the pillar reinforcing portion may be configured to include a main reinforcing portion and a branch portion, the main reinforcing portion extending in the vehicle front-rear direction along the pillar body portion, the branch portion branching off from the main reinforcing portion. The main reinforcing portion may be mechanically fastened to the framework body at the second fastening portion. The branch portion may be mechanically fastened to the framework body at a portion different from the second fastening portion.

With the vehicle front structure having the configuration as described above, since the pillar reinforcing portion includes the main reinforcing portion and the branch portion, and the main reinforcing portion and the branch portion are mechanically fastened to the framework body, a collision load input to the pillar reinforcing portion can be distributed between the main reinforcing portion and the branch portion.

In the vehicle front structure having the configuration as described above, the branch portion may be made of a member separate from the main reinforcing portion. The branch portion may extend in the vehicle-height direction.

With the vehicle front structure having the configuration as described above, since the branch portion extends in the vehicle-height direction, when the vehicle turns upside down due to a collision or other causes, a roof can be supported by the branch portion, and roof crush can be restrained.

In the vehicle front structure having the configuration as described above, the main reinforcing portion may have a tubular shape, and have a flat front-end portion. The main reinforcing portion may be mechanically fastened to the second fastening portion at the flat front-end portion.

With the vehicle front structure having the configuration as described above, it is possible to ensure a large contact area between the main reinforcing portion and the second fastening portion and improve the load transmission performance.

In the vehicle front structure having the configuration as described above, the branch portion may be fixed to the main reinforcing portion with the main reinforcing portion held by the branch portion from both sides in the vehicle-width direction.

With the vehicle front structure having the configuration as described above, since the branch portion is fixed with the main reinforcing portion held by the branch portion from both sides in the vehicle-width direction, the branch portion can be fixed on two faces of the main reinforcing portion. That is, the branch portion can be firmly fixed.

As described above, the vehicle front structure according to the present invention can effectively transmit a collision load to the front pillar in the event of a frontal collision in the structure in which the front portion of the vehicle is integrally formed by die casting.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view showing a framework body included in a vehicle front structure according to a first embodiment;
FIG. 2 is a perspective view showing a main part of the vehicle front structure according to the first embodiment;
FIG. 3 is a sectional view taken along line III-III of FIG. 2;
FIG. 4 is a perspective view showing a main part of a vehicle front structure according to a second embodiment;
FIG. 5 is a perspective view showing a main part of a pillar reinforcing portion in the second embodiment; and
FIG. 6 is a perspective view showing a main part of a vehicle front structure according to a third embodiment.

### DETAILED DESCRIPTION OF EMBODIMENTS

A vehicle front structure according to a first embodiment will be described with reference to the drawings.

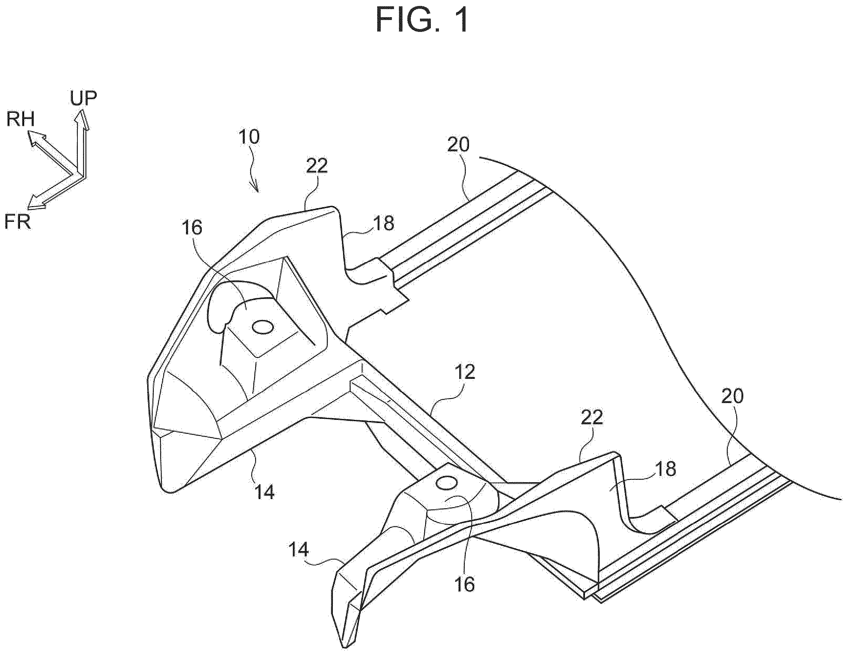

FIG. 1 is a perspective view showing a framework body included in the vehicle front structure according to the first embodiment. In the drawings, arrow FR, arrow UP, and arrow RH indicate a forward direction, an upward direction, and a rightward direction in a vehicle, respectively. Front and rear, up and down, and right and left used in the following description indicate front and rear in the vehicle front-rear direction, up and down in the vehicle-height direction, and right and left in the vehicle right-left direction (vehicle-width direction), respectively, unless otherwise specifically noted.

As shown in FIG. 1, the vehicle front structure of the first embodiment includes a framework body 10. The framework body 10 is integrally formed by die casting and disposed at a front portion of the vehicle to constitute a framework of the vehicle. The framework body 10 is made of metal that is mainly composed of aluminum. The framework body 10 includes a dash portion 12, a front side member portion 14, a suspension tower portion 16, and a front pillar lower portion 18.

The dash portion 12 extends in the vehicle-width direction and the vehicle-height direction, and separates a space inside a vehicle cabin and a space outside the vehicle cabin from each other. The front side member portion 14 extends forward in the vehicle front-rear direction from an upper end portion of the dash portion 12. A pair of right and left front side member portions 14 is provided. A rear end portion of each front side member portion 14 is connected to the dash portion 12. A front-end portion of each front side member portion 14 is connected to a bumper reinforcement (not shown).

The suspension tower portion 16 is provided outside each front side member portion 14 in the vehicle-width direction. The suspension tower portion 16 projects upward in the vehicle-height direction relative to the front side member portion 14. A suspension (not shown) is disposed below the suspension tower portion 16.

The front pillar lower portion 18 is provided on each side of the dash portion 12 in the vehicle-width direction. The front pillar lower portion 18 extends in the vehicle-height direction. A rocker 20 that is a framework member is connected to a lower end portion of the front pillar lower portion 18. The rocker 20 extends in the vehicle front-rear direction, and a front-end portion of the rocker 20 is connected to the front pillar lower portion 18. The rocker 20 has a closed section structure and extends up to a rear portion of the vehicle.

The framework body 10 is provided with a front-rear extending portion 22 that extends forward in the vehicle front-rear direction from an upper end portion of the front pillar lower portion 18. That is, the framework body 10 includes the front-rear extending portion 22 that extends in the vehicle front-rear direction. The front-rear extending portion 22 may be a portion that functions as an apron upper member.

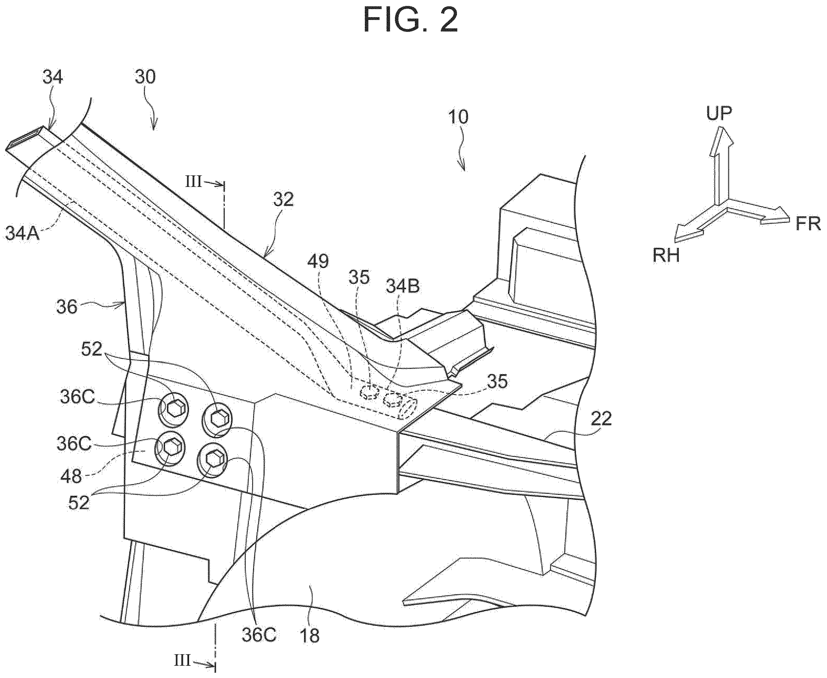

FIG. 2 is a perspective view showing a main part of the vehicle front structure according to the first embodiment. As shown in FIG. 2, in the vehicle front structure of the first embodiment, a front pillar 30 is connected to a rear end portion of the framework body 10.

The front pillar 30 extends in the vehicle-height direction. Specifically, the front pillar 30 obliquely extends such that its upper end portion is located rearward of its lower end portion in the vehicle front-rear direction. The front pillar 30 includes a pillar body portion 32, and a pillar reinforcing portion 34.

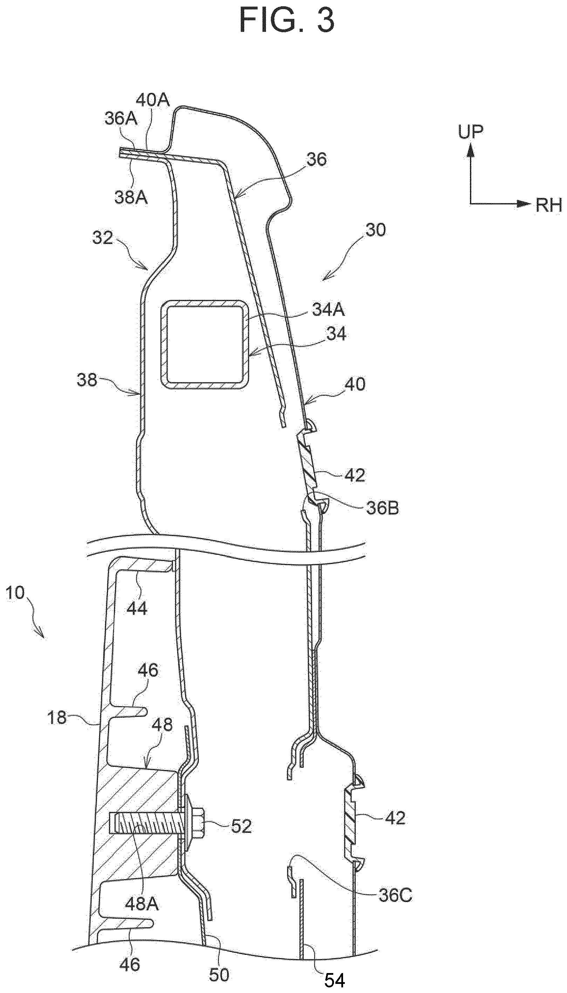

FIG. 3 is a sectional view taken along line III-III of FIG. 2. As shown in FIG. 3, the pillar body portion 32 includes a pillar outer panel 36, and a pillar inner panel 38. The pillar outer panel 36 constitutes the outer side of the pillar body portion 32 in the vehicle-width direction, and the pillar inner panel 38 constitutes the inner side of the pillar body portion 32 in the vehicle-width direction.

The pillar outer panel 36 has at its upper end portion an outer flange 36A that extends inward in the vehicle-width direction. The pillar outer panel 36 also has a first working hole 36B and a second working hole 36C that are disposed in this order from the upper side. The first working hole 36B and the second working hole 36C are used for work such as passing a wire harness into the pillar body portion 32 and tightening a bolt. The first working hole 36B and the second working hole 36C are examples of working holes, and the number and size of working holes are not limited to any particular number and size.

The pillar inner panel 38 is disposed inward of the pillar outer panel 36 in the vehicle-width direction. The pillar inner panel 38 has at its upper end portion an inner flange 38A that extends inward in the vehicle-width direction along the outer flange 36A. The inner flange 38A and the outer flange 36A are overlaid and joined together by, for example, welding.

A side member outer panel 40 is disposed outside the pillar outer panel 36. The side member outer panel 40 constitutes a design surface of the vehicle and extends in the vehicle-height direction along the pillar outer panel 36.

The side member outer panel 40 has openings at positions corresponding to the first working hole 36B and the second working hole 36C of the pillar outer panel 36, and each of the openings is closed with a grommet 42.

The pillar body portion 32 is configured as described above, and the pillar inner panel 38 of the pillar body portion 32 is mechanically fastened to the framework body 10.

An upper flange 44 extends outward in the vehicle-width direction from an upper end portion of the front pillar lower portion 18 of the framework body 10. A clearance between the upper flange 44 and the pillar inner panel 38 is sealed. The front pillar lower portion 18 is provided with a plurality of ribs 46. Each of the ribs 46 projects outward in the vehicle-width direction and extends in the vehicle front-rear direction. In FIG. 3, two ribs 46 are provided with a space therebetween in the vehicle-height direction. However, this is not a limitation, and more ribs may be provided.

A first fastening portion 48 is provided between the upper and lower ribs 46. The first fastening portion 48 is, for example, a mounting base having a substantially columnar shape and has a bolt hole 48A open on its outer face in the vehicle-width direction.

A bolt 52 is screwed in the first fastening portion 48. The pillar body portion 32 is mechanically fastened to the framework body 10 with the bolt 52. In the first embodiment, as an example, a pillar inner lower panel 50 is held between the first fastening portion 48 and the pillar inner panel 38. The pillar inner lower panel 50 is disposed under the pillar inner panel 38. The pillar inner panel 38 and the pillar inner lower panel 50 are fastened together by inserting the bolt 52 through the second working hole 36C and screwing the bolt 52 into the first fastening portion 48 with the pillar inner panel 38 and the pillar inner lower panel 50 overlapping.

A pillar outer lower panel 54 is disposed under the pillar outer panel 36. The pillar outer lower panel 54 is joined to the pillar outer panel 36 by a method such as welding. Thus, the pillar outer lower panel 54 is fastened to the framework body 10 together with the pillar outer panel 36 and the pillar inner panel 38.

As shown in FIG. 1, in the first embodiment, as an example, the pillar body portion 32 is mechanically fastened to the first fastening portion 48 with four bolts 52. However, the fastening location and position are not limited to any particular location and position. For example, the pillar body portion 32 may be fastened to the first fastening portion 48 with more bolts 52 or with bolts 52 arranged at intervals in the vehicle-height direction up to the rocker 20.

As shown in FIG. 2, the pillar reinforcing portion 34 is disposed inside the pillar body portion 32. The pillar reinforcing portion 34 is made of a high tensile strength steel sheet or an ultra-high tensile strength steel sheet, unlike the pillar body portion 32 made of a typical steel sheet. The pillar reinforcing portion 34 may be partially exposed from the pillar body portion 32.

The pillar reinforcing portion 34 includes a reinforcing portion body 34A that obliquely extends along the pillar body portion 32, and a flat portion 34B that is provided at a lower end of the reinforcing portion body 34A. The reinforcing portion body 34A has a tubular shape with its axis aligned with the extending direction of the pillar body portion 32. In the first embodiment, as an example, the reinforcing portion body 34A has a substantially rectangular tubular shape.

The flat portion 34B is overlaid on a second fastening portion 49 that is set on the upper side of the framework body 10 in the vehicle-height direction and formed in a flat shape by flattening the tubular portion of the pillar reinforcing portion 34. The flat portion 34B extends in the vehicle front-rear direction. Since the second fastening portion 49 is set on the front-rear extending portion 22, the front-rear extending portion 22 of the framework body 10 and the flat portion 34B of the pillar reinforcing portion 34 are connected in a substantially straight line in the vehicle front-rear direction.

The flat portion 34B is mechanically fastened to the second fastening portion 49 with bolts 35. That is, the front pillar 30 is mechanically fastened to the first fastening portion 48 at the pillar body portion 32 and mechanically fastened to the second fastening portion 49 at the pillar reinforcing portion 34.

Next, the actions of the vehicle front structure according to the first embodiment will be described.

As shown in FIG. 1, in the vehicle front structure according to the first embodiment, the framework body 10 is integrally formed by die casting. This makes it possible to reduce the number of parts and improve strength compared to a case in which a framework body is made of a steel sheet or the like.

In addition, as shown in FIGS. 2 and 3, the vehicle front structure includes the front pillar 30 extending in the vehicle-height direction. The front pillar 30 is mechanically fastened to the framework body 10 at least at the first fastening portion 48 set on the outer side of the framework body 10 in the vehicle-width direction and the second fastening portion 49 set on the upper side of the framework body 10 in the vehicle-height direction. Since the front pillar 30 is mechanically fastened to the framework body 10 at two positions in this manner, even when a collision load is input from the framework body 10 to the front pillar 30 in the event of a frontal collision, a favorable fastened state between the front pillar 30 and the framework body 10 can be maintained. That is, with the vehicle front structure according to the first embodiment, in the structure in which the front portion of the vehicle is integrally formed by die casting, a collision load can be effectively transmitted to the front pillar 30 in the event of a frontal collision.

In addition, in the first embodiment, since the front pillar 30 includes the pillar body portion 32, and the pillar reinforcing portion 34, the pillar reinforcing portion 34 disposed inside the pillar body portion 32 reinforces the front pillar 30. Furthermore, since both the pillar body portion 32 and the pillar reinforcing portion 34 are fastened to the framework body 10, the collision load input from the framework body 10 to the front pillar 30 can be distributed between the pillar body portion 32 and the pillar reinforcing portion 34.

Furthermore, compared to a structure that does not includes the pillar reinforcing portion 34, the pillar body portion 32 does not need to be thickened. Thus, it is possible to restrain the front pillar 30 from obstructing a view of an occupant. For example, when a front pillar is made of a typical steel sheet without a pillar reinforcing portion, it is necessary to increase the cross-sectional area of the front pillar to ensure sufficient load transmission performance, which may narrow the view of an occupant seated in the front seat. On the other hand, when the pillar reinforcing portion 34 is provided as in the first embodiment, sufficient load transmission performance can be ensured without the necessity of increasing the cross-sectional area of the pillar body portion 32. Thus, high visibility of the occupant can be maintained.

In particular, in the first embodiment, the tubular shape of the pillar reinforcing portion 34 makes it possible to transmit a collision load along the pillar reinforcing portion 34 while restraining an increase in the weight of the front pillar 30. In addition, since the fastened portion of the pillar reinforcing portion 34 to the second fastening portion 49 has a flat shape, it is possible to ensure a larger contact area between the framework body 10 and the pillar reinforcing portion 34 than in a case in which the fastened portion has a tubular shape, which facilitates the transmission of the collision load.

In addition, in the first embodiment, since the front-rear extending portion 22 of the framework body 10 and the front pillar 30 are connected in the vehicle front-rear direction through the second fastening portion 49, a collision load can be smoothly transmitted from the framework body 10 to the front pillar 30 in the event of a frontal collision.

Furthermore, in the first embodiment, since the framework body 10 is provided with the front pillar lower portion 18, the front pillar 30 can be coupled to a framework of the lower portion of the vehicle such as the rocker 20 through the front pillar lower portion 18.

Next, a vehicle front structure according to a second embodiment will be described with reference to the drawings. Note that configurations similar to those of the first embodiment will be designated by the same reference signs as those in the first embodiment, and description thereof will be omitted as appropriate.

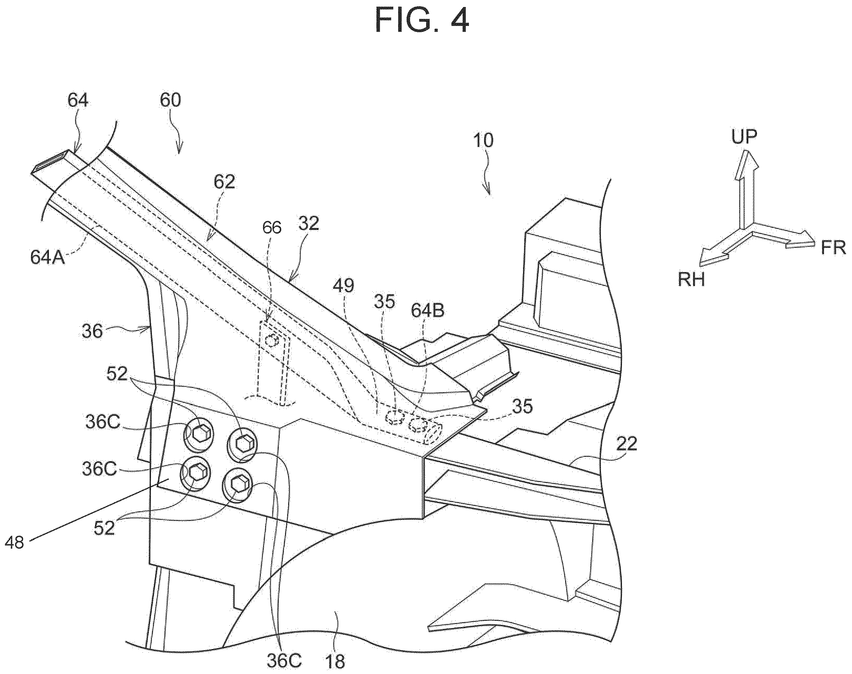

FIG. 4 is a perspective view showing a main part of the vehicle front structure according to the second embodiment. As shown in FIG. 4, the configuration of the second embodiment is the same as that of the first embodiment except a pillar reinforcing portion 62 of a front pillar 60.

The pillar reinforcing portion 62 included in the front pillar 60 of the second embodiment includes a main reinforcing portion 64, and a branch portion 66. The main reinforcing portion 64 extends in the vehicle front-rear direction along the pillar body portion 32. The main reinforcing portion 64 includes a reinforcing portion body 64A having a tubular shape, and a flat portion 64B that is provided at a lower end of the reinforcing portion body 64A.

The flat portion 64B is overlaid on the second fastening portion 49 that is set on the upper side of the framework body 10 in the vehicle-height direction and formed in a flat shape by flattening the tubular portion of the main reinforcing portion 64. The flat portion 64B extends in the vehicle front-rear direction. The flat portion 64B is mechanically fastened to the second fastening portion 49 with the bolts 35.

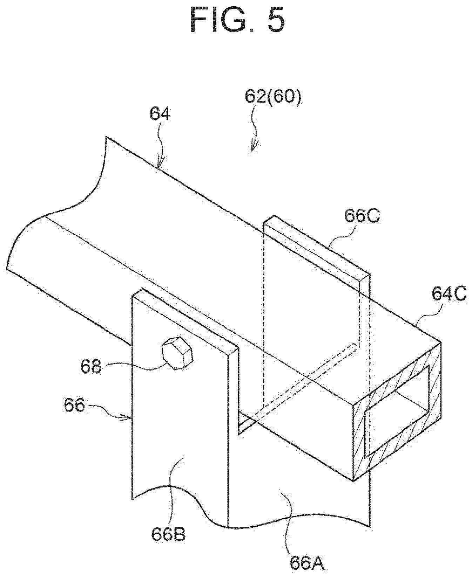

FIG. 5 is a perspective view showing a main part of the pillar reinforcing portion 62 in the second embodiment. As shown in FIG. 5, the branch portion 66 is made of a member separate from the main reinforcing portion 64 and extends in the vehicle-height direction.

In the second embodiment, as an example, the branch portion 66 is made of a pressed steel sheet. The branch portion 66 includes a front wall 66A facing forward in the vehicle front-rear direction, a right wall 66B facing rightward in the vehicle-width direction, and a left wall 66C facing leftward in the vehicle-width direction. Thus, the branch portion 66 has a substantially U-shape open rearward in the vehicle front-rear direction when viewed in the vehicle-height direction, and supports the main reinforcing portion 64 from below with an upper end of the front wall 66A kept in contact with the main reinforcing portion 64.

A bolt 68 is inserted into the right wall 66B from the right side of the vehicle and screwed with the main reinforcing portion 64. Although not shown in the drawings, a bolt similar to the bolt 68 is inserted into the left wall 66C and screwed with the main reinforcing portion 64. In this manner, in the second embodiment, the branch portion 66 is fixed to the main reinforcing portion 64 with the main reinforcing portion 64 held by the branch portion 66 from both sides in the vehicle-width direction.

A lower end portion of the branch portion 66 is mechanically fastened to the framework body 10. The lower end portion of the branch portion 66 is fastened to a portion different from the second fastening portion 49. For example, the lower end portion of the branch portion 66 may be fastened to the front pillar lower portion 18 of the framework body 10 with a bolt or the like.

Next, the actions of the vehicle front structure according to the second embodiment will be described.

In the second embodiment, as shown in FIGS. 4 and 5, the pillar reinforcing portion 62 includes the main reinforcing portion 64, and the branch portion 66. The main reinforcing portion 64 and the branch portion 66 are mechanically fastened to the framework body 10. Thus, a collision load input to the pillar reinforcing portion 62 can be distributed.

In addition, in the second embodiment, since the branch portion 66 extends in the vehicle-height direction, when the vehicle turns upside down due to a collision or other causes, a roof can be supported by the branch portion 66, and roof crush can be restrained.

In addition, in the second embodiment, since the fastened portion of the main reinforcing portion 64 to the second fastening portion 49 is the flat portion 64B, it is possible to ensure a large contact area between the main reinforcing portion 64 and the framework body 10 and improve the load transmission performance.

Furthermore, in the second embodiment, since the branch portion 66 is fixed with the main reinforcing portion 64 held by the branch portion 66 from both sides in the vehicle-width direction, the branch portion 66 can be fixed on two faces of the main reinforcing portion 64. That is, the branch portion 66 can be firmly fixed. The other actions are the same as those of the first embodiment.

Next, a vehicle front structure according to a third embodiment will be described with reference to the drawings. Note that configurations similar to those of the first embodiment will be designated by the same reference signs as those in the first embodiment, and description thereof will be omitted as appropriate.

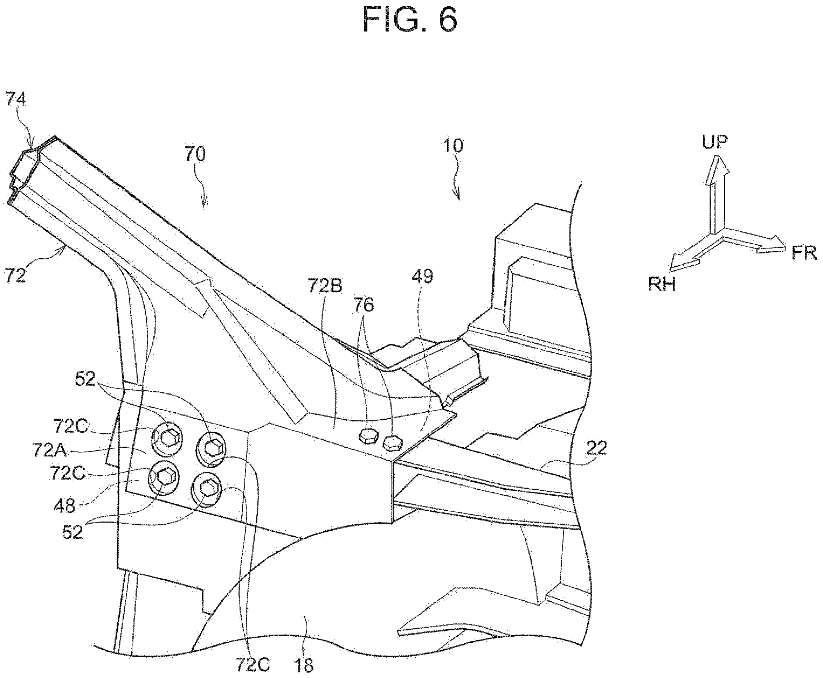

FIG. 6 is a perspective view showing a main part of the vehicle front structure according to the third embodiment. As shown in FIG. 6, the configuration of the third embodiment differs from the configurations of the first and second embodiments in that no pillar reinforcing portion is provided.

A front pillar 70 of the third embodiment extends in the vehicle-height direction. The front pillar 70 includes a pillar inner panel 74, and a pillar outer panel 72. The pillar inner panel 74 is disposed on the inner side of the front pillar 70 in the vehicle-width direction and made of a high strength material, such a high tensile strength steel sheet or an ultra-high tensile strength steel sheet. In addition, the pillar inner panel 74 obliquely extends such that its upper end portion is located rearward of its lower end portion in the vehicle front-rear direction.

The pillar outer panel 72 is disposed on the outer side of the front pillar 70 in the vehicle-width direction and made of a high strength material, such a high tensile strength steel sheet or an ultra-high tensile strength steel sheet. In addition, the pillar outer panel 72 obliquely extends such that its upper end portion is located rearward of its lower end portion in the vehicle front-rear direction. The pillar outer panel 72 is joined to the pillar inner panel 74 by, for example, welding. Thus, the front pillar 70 has a closed cross-sectional shape defined by the pillar inner panel 74 and the pillar outer panel 72.

A lower end portion of the pillar outer panel 72 extends along the framework body 10 and has a first fastening face 72A that is overlaid on the first fastening portion 48 set on the outer side of the framework body 10 in the vehicle-width direction. The first fastening face 72A extends in the vehicle-height direction and the vehicle front-rear direction, and a rear portion of the first fastening face 72A has four openings 72C.

The pillar inner panel 74 is exposed in portions having the openings 72C, and the pillar inner panel 74 is mechanically fastened to the first fastening portion 48 of the framework body 10 with bolts 52. A side member outer panel (not shown) is disposed outside the pillar outer panel 72 in the vehicle-width direction, and the pillar outer panel 72 and the bolts 52 are covered with the side member outer panel.

At the lower end portion of the pillar outer panel 72, a second fastening face 72B extends inward in the vehicle-width direction from an upper end of the first fastening face 72A. The second fastening face 72B is overlaid on the second fastening portion 49 that is set on the upper side of the framework body 10 in the vehicle-height direction, and the second fastening face 72B is mechanically fastened to the second fastening portion 49 with a plurality of bolts 76.

Next, the actions of the vehicle front structure according to the third embodiment will be described.

In the third embodiment, the front pillar 70 is made of the high strength material and mechanically fastened to the framework body 10 at two positions, specifically, at the first fastening portion 48 and the second fastening portion 49. Thus, even when a collision load is input from the framework body 10 to the front pillar 70 in the event of a frontal collision of the vehicle, a favorable fastened state between the front pillar 70 and the framework body 10 can be maintained.

Although the vehicle front structure according to the present invention has been described above, it is needless to say that the present invention can be carried out in various modes without departing from the gist of the invention. For example, although, as shown in FIG. 1, in the first embodiment, the framework body 10 includes the dash portion 12, the front side member portion 14, the suspension tower portion 16, and the front pillar lower portion 18, this is not a limitation. That is, the framework body 10 may include some of the dash portion 12, the front side member portion 14, the suspension tower portion 16, and the front pillar lower portion 18.

In addition, although, in the first embodiment, as shown in FIG. 2, the flat portion 34B provided at the lower end of the reinforcing portion body 34A is mechanically fastened to the second fastening portion 49 of the framework body 10, this is not a limitation. For example, without flattening the front-end portion of the pillar body portion 32, the front-end portion having a tubular shape may be mechanically fastened to the second fastening portion 49 with the bolt 35 or the like. Furthermore, although, in the first embodiment, the reinforcing portion body 34A and the flat portion 34B are integrally formed, this is not a limitation. A flat member may be prepared for a separate flat portion, and the flat portion may be joined to the reinforcing portion body by, for example, welding. In this case, the shape of the flat portion is not limited to a shape formed by flattening a tubular body.

Furthermore, although, in the second embodiment, as shown in FIG. 5, the main reinforcing portion 64 and the branch portion 66 of the pillar reinforcing portion 62 are formed as separate members, and the branch portion 66 is fixed to the main reinforcing portion 64 with the main reinforcing portion 64 held by the branch portion 66 from both sides in the vehicle-width direction, this is not a limitation. For example, the main reinforcing portion 64 and the branch portion 66 may be integrally formed.

Furthermore, the branch portion 66 may have another shape. For example, the branch portion may be fixed to the main reinforcing portion with the main reinforcing portion held by the branch portion from both sides in the vehicle-height direction.

The following supplements 1 to 11 are disclosed regarding the first to third embodiments.

### <Supplement 1>

A vehicle front structure including: a framework body integrally formed by die casting, the framework body constituting a framework of a vehicle front portion; and a front pillar extending in a vehicle-height direction, the front pillar being mechanically fastened to the framework body at least at a first fastening portion set on an outer side of the framework body in a vehicle-width direction and a second fastening portion set on an upper side of the framework body in the vehicle-height direction.

### <Supplement 2>

The vehicle front structure according to supplement 1, in which the front pillar includes a pillar body portion constituting an outer face, and a pillar reinforcing portion at least partially disposed inside the pillar body portion, the pillar body portion and the first fastening portion are mechanically fastened together, and the pillar reinforcing portion and the second fastening portion are mechanically fastened together.

### <Supplement 3>

The vehicle front structure according to supplement 2, in which the first fastening portion is a mounting base having a substantially columnar shape.

### <Supplement 4>

The vehicle front structure according to supplement 2, in which the pillar reinforcing portion has a tubular shape with an axis aligned with an extending direction of the pillar body portion, and a fastened portion of the pillar reinforcing portion to the second fastening portion has a flat shape formed by flattening a tubular portion.

### <Supplement 5>

The vehicle front structure according to any one of supplements 1 to 4, in which the framework body includes a front-rear extending portion extending in a vehicle front-rear direction, and a fastened portion between the front pillar and the second fastening portion is set on the front-rear extending portion.

### <Supplement 6>

The vehicle front structure according to any one of supplements 1 to 5, in which the framework body includes a front pillar lower portion extending in the vehicle-height direction, and a fastened portion between the front pillar and the first fastening portion is set on the front pillar lower portion.

### <Supplement 7>

The vehicle front structure according to supplement 6, in which the front pillar lower portion is provided with a plurality of ribs, each of the ribs projecting outward in the vehicle-width direction and extending in a vehicle front-rear direction.

### <Supplement 8>

The vehicle front structure according to supplement 2, in which the pillar reinforcing portion includes a main reinforcing portion extending in a vehicle front-rear direction along the pillar body portion, and a branch portion branching off from the main reinforcing portion, the main reinforcing portion is mechanically fastened to the framework body at the second fastening portion, and the branch portion is mechanically fastened to the framework body at a portion different from the second fastening portion.

### <Supplement 9>

The vehicle front structure according to supplement 8, in which the branch portion is made of a member separate from the main reinforcing portion, and the branch portion extends in the vehicle-height direction.

### <Supplement 10>

The vehicle front structure according to supplement 8 or 9, in which the main reinforcing portion has a tubular shape, and has a flat front-end portion formed by flattening a tubular portion, and the main reinforcing portion is mechanically fastened to the second fastening portion at the flat front-end portion.

### <Supplement 11>

The vehicle front structure according to any one of supplements 8 to 10, in which the branch portion is fixed to the main reinforcing portion with the main reinforcing portion held by the branch portion from both sides in the vehicle-width direction.

## Claims

1. A vehicle front structure comprising:
a framework body (10) integrally formed by die casting, the framework body (10) constituting a framework of a vehicle front portion; and
a front pillar (30; 60) extending in a vehicle-height direction, the front pillar (30; 60) being mechanically fastened to the framework body (10) at least at a first fastening portion (48) and a second fastening portion (49), the first fastening portion (48) setting on an outer side of the framework body (10) in a vehicle-width direction, the second fastening portion (49) setting on an upper side of the framework body (10) in the vehicle-height direction, wherein
the front pillar (30; 60) is configured to include a pillar body portion (32) constituting an outer face and a pillar reinforcing portion (34; 62) at least partially disposed inside the pillar body portion (32),
the pillar body portion (32) and the first fastening portion (48) are mechanically fastened together, and
the pillar reinforcing portion (34; 62) and the second fastening portion (49) are mechanically fastened together.

2. The vehicle front structure according to claim 1, wherein the first fastening portion (48) is a mounting base having a substantially columnar shape.

3. The vehicle front structure according to claim 1, wherein:
the pillar reinforcing portion (34; 62) has a tubular shape with an axis aligned with an extending direction of the pillar body portion (32); and
a fastened portion of the pillar reinforcing portion (34; 62) to the second fastening portion (49) has a flat shape.

4. The vehicle front structure according to claim 1, wherein:
the framework body (10) is configured to include a front-rear extending portion (22) extending in a vehicle front-rear direction; and
a fastened portion between the front pillar (30; 60) and the second fastening portion (49) is set on the front-rear extending portion (22).

5. The vehicle front structure according to claim 1 or 2, wherein:
the framework body (10) is configured to include a front pillar lower portion (18) extending in the vehicle-height direction; and
a fastened portion between the front pillar (30; 60) and the first fastening portion (48) is set on the front pillar lower portion (18).

6. The vehicle front structure according to claim 5, wherein the front pillar lower portion (18) is provided with a plurality of ribs (46), each of the ribs (46) projecting outward in the vehicle-width direction and extending in a vehicle front-rear direction.

7. The vehicle front structure according to claim 1, wherein:
the pillar reinforcing portion (62) is configured to include a main reinforcing portion (64) and a branch portion (66), the main reinforcing portion (64) extending in a vehicle front-rear direction along the pillar body portion (32), the branch portion (66) branching off from the main reinforcing portion (64);
the main reinforcing portion (64) is mechanically fastened to the framework body (10) at the second fastening portion (49); and
the branch portion (66) is mechanically fastened to the framework body (10) at a portion different from the second fastening portion (49).

8. The vehicle front structure according to claim 7, wherein:
the branch portion (66) is made of a member separate from the main reinforcing portion (64); and
the branch portion (66) extends in the vehicle-height direction.

9. The vehicle front structure according to claim 8, wherein:
the main reinforcing portion (64) has a tubular shape, and has a flat front-end portion; and
the main reinforcing portion (64) is mechanically fastened to the second fastening portion (49) at the flat front-end portion.

10. The vehicle front structure according to claim 9, wherein the branch portion (66) is fixed to the main reinforcing portion (64) with the main reinforcing portion (64) held by the branch portion (66) from both sides in the vehicle-width direction.
